(19) Europäisches Patentamt
European Patent Office
Office européen des brevets

(11) **EP 2 928 052 A1**

(12) **EUROPÄISCHE PATENTANMELDUNG**

(43) Veröffentlichungstag:
07.10.2015 Patentblatt 2015/41

(51) Int Cl.:
*H02K 21/40* (2006.01)    *H02K 1/20* (2006.01)

(21) Anmeldenummer: 14163031.9

(22) Anmeldetag: 01.04.2014

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder: **Vollmer, Rolf**
**36129 Gersfeld (DE)**

Bemerkungen:
Geänderte Patentansprüche gemäss Regel 137(2) EPÜ.

(54) **Elektrische Maschine mit permanenterregtem Innenstator und Aussenstator mit Wicklungen**

(57)    Die Erfindung betrifft eine elektrische Maschine (1) mit einem Außenstator (2), einem Innenstator (10), der konzentrisch zu dem Außenstator (2) innerhalb des Außenstators (2) angeordnet ist, und einem Rotor (7), der konzentrisch zu dem Außenstator (2) und dem Innenstator (10) zwischen dem Außenstator (2) und dem Innenstator (10) angeordnet ist und der relativ zum Außenstator (2) und zum Innenstator (10) bewegbar ist, wobei der Außenstator (2) eine Mehrzahl von Wicklungen (3) aufweist, der Innenstator (10) eine Mehrzahl von Permanentmagneten (12) aufweist, und der Rotor (7) ein Trägerelement (8) umfasst, das aus einem amagnetischen Material gebildet ist und das eine Mehrzahl von Aussparungen aufweist, in denen jeweils ein weichmagnetisches Segment (9) angeordnet ist.

FIG 3

Printed by Jouve, 75001 PARIS (FR)

EP 2 928 052 A1

**Beschreibung**

Die vorliegende Erfindung betrifft eine elektrische Maschine mit einem Außenstator, einem Innenstator, der konzentrisch zu dem Außenstator innerhalb des Außenstators angeordnet ist, und einem Rotor, der konzentrisch zu dem Außenstator und dem Innenstator zwischen dem Außenstator und dem Innenstator angeordnet ist und der relativ zum Außenstator und zum Innenstator bewegbar ist.

Das Interesse richtet sich vorliegend auf elektrische Maschinen, die als Synchronmaschinen, insbesondere als Drehstromsynchronmaschinen, ausgebildet sind. Derartige Drehstromsynchronmaschinen können beispielsweise als Motor oder auch als Generator betrieben werden und gewinnen immer mehr an Bedeutung. Dabei sind aus dem Stand der Technik permanenterregte Drehstromsynchronmaschinen bekannt. Des Weiteren sind elektrische Maschinen bekannt, die einen Außenstator und einen Innenstator aufweisen, zwischen denen ein Rotor angeordnet ist.

Bei permanenterregten Drehstromsynchronmaschinen sind auf dem Rotor bzw. dem Läufer Permanentmagneten angeordnet. Permanentmagneten weisen den Nachteil auf, dass diese begrenzte Einsatztemperaturen aufweisen. Aus diesem Grund werden verstärkt Magnete mit Seltenen Erden verwendet, die im Vergleich zu üblicherweise verwendeten Permanentmagneten höhere Einsatztemperaturen aufweisen. Nachteilig an den Seltenerdmagneten ist deren hoher Preis. Eine Kühlung des Rotors bzw. der Permanentmagneten, beispielsweise durch eine Wasserkühlung, ist nur mit hohem Aufwand möglich.

Es ist Aufgabe der vorliegenden Erfindung, eine elektrische Maschine der eingangs genannten Art bereitzustellen, welche kostengünstiger ist und effektiver betrieben werden kann. Diese Aufgabe wird durch eine elektrische Maschine mit den Merkmalen des Patentanspruchs 1 gelöst. Vorteilhafte Weiterbildungen der vorliegenden Erfindung sind Gegenstand der abhängigen Ansprüche.

Die erfindungsgemäße elektrische Maschine umfasst einen Außenstator, einen Innenstator, der konzentrisch zu dem Außenstator innerhalb des Außenstators angeordnet ist, und einen Rotor, der konzentrisch zu dem Außenstator und dem Innenstator zwischen dem Außenstator und dem Innenstator angeordnet ist und der relativ zum Außenstator und zum Innenstator bewegbar ist, wobei der Außenstator eine Mehrzahl von Wicklungen aufweist, der Innenstator eine Mehrzahl von Permanentmagneten aufweist und der Rotor ein Trägerelement umfasst, das aus einem amagnetischen Material gebildet ist und das eine Mehrzahl von Aussparungen aufweist, in denen jeweils ein weichmagnetisches Segment angeordnet ist.

Die elektrische Maschine ist insbesondere als Drehstromsynchronmaschine ausgebildet und kann als Motor oder als Generator verwendet werden. Die elektrische Maschine umfasst einen Außenstator, der mehrere Wicklungen aufweist. Zu diesem Zweck kann der Außenstator entsprechende Nuten aufweisen, in denen die Wicklungen angeordnet sind. Innerhalb des Außenstators ist der Rotor angeordnet, der beispielsweise mit einer Welle drehfest verbunden sein kann. Der Rotor umfasst wiederum ein Trägerelement, das aus einem amagnetischen Material gebildet ist. Ein amagnetisches Material ist üblicherweise durch ein magnetisches Feld nicht beeinflussbar. In das Trägerelement sind eine Mehrzahl von weichmagnetischen Segmenten eingebettet. Schließlich umfasst die elektrische Maschine einen Innenstator, der eine Mehrzahl von Permanentmagneten aufweist. Somit kann eine permanenterregte Drehstromsynchronmaschine bereitgestellt werden, bei der die Permanentmagneten an dem Innenstator angeordnet sind und somit im Betrieb der elektrischen Maschine nicht bewegt werden. Somit kann Wärme, die im Betrieb der elektrischen Maschine entsteht, einfacher von dem Permanentmagneten abgeführt werden als bei elektrischen Maschinen, bei denen die Permanentmagneten in dem Rotor vorgesehen sind.

In einer bevorzugten Ausführungsform weist die elektrische Maschine eine erste Kühleinrichtung zum Kühlen des Innenstators auf. Somit kann die im Betrieb der elektrischen Maschine entstehende Wärme zuverlässig von den Permanentmagneten des Innenstators abgeführt werden. Auf diese Weise kann verhindert werden, dass die Permanentmagneten entmagnetisiert werden. Somit können Magnete mit einer geringeren Koerzitivfeldstärke eingesetzt werden. Dies bedeutet wiederum, dass Permanentmagneten mit einem geringeren Anteil an Seltenen Erden verwendet werden können. Auf diese Weise kann die Remanenz erhöht und die Kosten reduziert werden.

Bevorzugt weist die elektrische Maschine eine zweite Kühleinrichtung zum Kühlen des Außenstators auf. Durch die zweite Kühleinrichtung kann verhindert werden, dass die Wicklungen des Außenstators im Betrieb der elektrischen Maschine überhitzt und somit gegebenenfalls beschädigt werden. Auf diese Weise kann ein zuverlässiger Betrieb der elektrischen Maschine ermöglicht werden.

Weiterhin ist es vorteilhaft, wenn die erste Kühleinrichtung und/oder die zweite Kühleinrichtung eine Mehrzahl von Kühlrohren aufweisen, die von einer Kühlflüssigkeit durchströmt sind. Als Kühlflüssigkeit kann beispielsweise Wasser oder ein Wasser-Glykol-Gemisch verwendet werden. Entsprechende Kühlrohre können einfach und kostengünstig gefertigt werden. In einer Ausgestaltung sind die Kühlrohre in einem Eisenpaket des Innenstators und/oder des Außenstators angeordnet. Beispielsweise können die Kühlrohre der ersten Kühleinrichtung und/oder der zweiten Kühleinrichtung durch entsprechende Bohrungen, die in das jeweilige Eisenpaket eingebracht sind, bereitgestellt werden. Derartige Kühlrohre sind einfach und kostengünstig zu fertigen.

Weiterhin hat es sich vorteilhaft gezeigt, wenn die Kühlrohre entlang der axialen Richtung der elektrischen Maschine in Umfangsrichtung gleichmäßig verteilt angeordnet sind. Durch eine derartige Anordnung der Kühlrohre kann die im Betrieb der elektrischen Maschine entstehende Wärme sowohl im Innenstator als auch im Außenstator gleichmäßig abgeführt werden.

In einer Ausgestaltung sind die Permanentmagnete des Innenstators aus einem Ferrit gebildet. Die Verwendung eines Ferrits weist den Vorteil auf, dass somit kostengünstige Permanentmagneten für den Innenstator bereitgestellt werden können.

In einer alternativen Ausführungsform enthalten die Permanentmagenete des Innenstators Eisen-Neodym-Bor. Derartige Permanentmagneten des Innenstators, die Eisen, Neodym und/ oder Bor aufweisen, zeichnen sich durch eine hohe Temperaturbeständigkeit aus.

In einer weiteren Ausgestaltung ist der Rotor topfförmig ausgebildet. Eine derartige Ausgestaltung des Rotors weist den Vorteil auf, dass somit ein Rotor mit einer geringen Massenträgheit bereitgestellt werden kann. Auf diese Weise kann eine elektrische Maschine bzw. ein Motor mit einer hohen Dynamik bereitgestellt werden.

In einer weiteren Ausführungsform ist der Rotor mit einer Welle verbunden, die als Hohlwelle ausgebildet ist. Insbesondere für den Fall, dass die elektrische Maschine für eine Werkzeugmaschine verwendet wird, kann durch die Verwendung einer Hohlwelle eine flexible Ausgestaltung der Werkzeugmaschine ermöglicht werden.

Die vorliegende Erfindung wird nun anhand der beigefügten Zeichnungen näher erläutert. Dabei zeigen:

FIG 1     eine erfindungsgemäße elektrische Maschine gemäß einer ersten Ausführungsform in einem Querschnitt;

FIG 2     die elektrische Maschine gemäß FIG 1 in einem Längsschnitt;

FIG 3     eine erfindungsgemäße elektrische Maschine gemäß einer weiteren Ausführungsform im Querschnitt;

FIG 4     die elektrische Maschine gemäß FIG 3 in einem Längsschnitt; und

FIG 5     ein Diagramm in dem die Magnetqualitätsänderung der Permanentmagnete eines Innenstators der elektrischen Maschine in Abhängigkeit von der Temperatur dargestellt ist.

Die nachfolgend näher geschilderten Ausführungsbeispiele stellen bevorzugte Ausführungsformen der vorliegenden Erfindung dar.

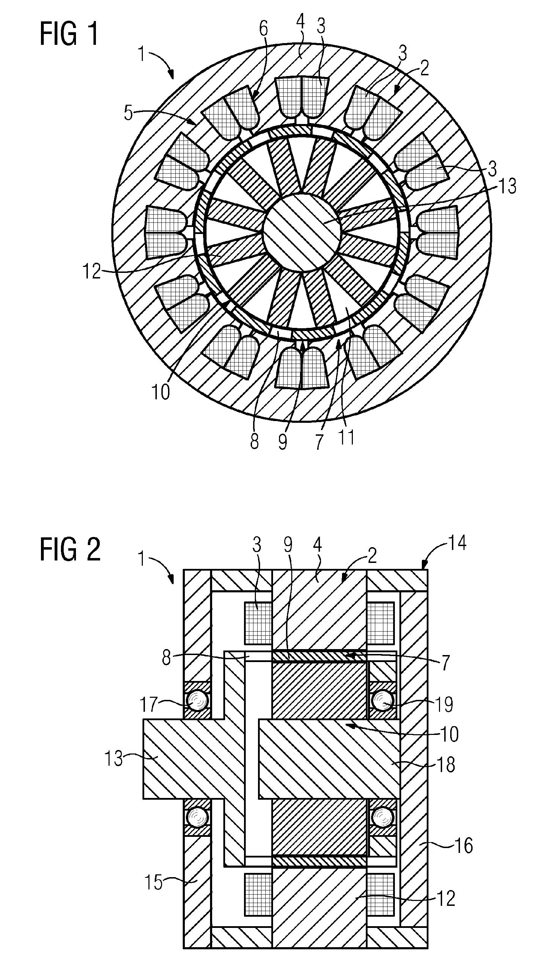

FIG 1 zeigt eine Darstellung einer ersten Ausführungsform einer elektrischen Maschine 1 im Querschnitt. Die elektrische Maschine 1 umfasst einen Außenstator 2. Der Außenstator 2 weist ein Eisenpaket 4 auf, das eine Mehrzahl von Zähnen 5 mit dazwischenliegenden Nuten 6 aufweist. In die Nuten 6 sind entsprechende Wicklungen 3 eingebracht. Die Wicklungen 3 sind üblicherweise mit einem hier nicht dargestellten Drehstromnetz elektrisch verbunden. Innerhalb des Außenstators 2 ist ein Rotor 7 angeordnet. Der Rotor 7 ist dabei konzentrisch zu dem Außenstator 2 angeordnet. Der Rotor 7 weist ein Trägerelement 8 auf, das aus einem amagnetischen Material gebildet ist. Das Trägerelement 8 weist mehrere Aussparungen auf, in die jeweils weichmagnetische Segmente 9 eingebettet sind. Des Weiteren weist die elektrische Maschine 1 einen Innenstator 10 auf. Der Innenstator 10 ist konzentrisch innerhalb des Rotors 7 angeordnet. Der Innenstator 10 umfasst ein Eisenpaket 11, das eine Mehrzahl von Aussparungen aufweist, in denen jeweils ein Permanentmagnet 12 angeordnet ist. Die Permanentmagneten 12 können beispielsweise Neodym-Eisen-Bor enthalten.

In dem vorliegenden Ausführungsbeispiel weist der Außenstator 2 bzw. dessen Wicklungen 3 die Polpaarzahl pw = 4 auf. Der Innenstator 10 bzw. dessen Permanentmagneten 12 weisen die Polpaarzahl pm = 6 auf. Der Rotor 7 weist vorliegend zehn weichmagnetische Segmente 9 auf. Somit ist die Polpaarzahl des Rotors pr = 10. Dabei entspricht die nach außen wirksame Polpaarzahl der Polpaarzahl des Rotors. Allgemein können die Polpaarzahlen der elektrischen Maschine 1 nach folgender Formel kombiniert werden:

$$pr = |pm +/- pw|$$

FIG 2 zeigt die elektrische Maschine 1 gemäß FIG 1 in einem Längsschnitt. Hierbei ist zu erkennen, dass der Rotor 7 topfförmig ausgebildet ist. Der topfförmige Rotor 7 ist mit einer Welle 13 drehfest verbunden. Darüber hinaus ist in FIG 2 ein Gehäuse 14 der elektrischen Maschine zu erkennen. Das Gehäuse 14 weist auf der Antriebsseite einen ersten Flansch 15 auf. Auf der Nichtantriebsseite weist das Gehäuse 14 einen zweiten Flansch 16 auf. Zwischen dem ersten Flansch 15 und der Welle 13 ist ein erstes Lager 17 angeordnet, das beispielsweise als Kugellager ausgebildet ist. Darüber hinaus weist die elektrische Maschine 1 ein Stützelement 18 auf, an welchem der Innenstator 10 gehalten ist. Zwischen dem Stützelement 18 und dem Rotor 7 ist ein zweites Lagerelement 19 angeordnet, das ebenfalls als Kugellager ausgebildet sein kann.

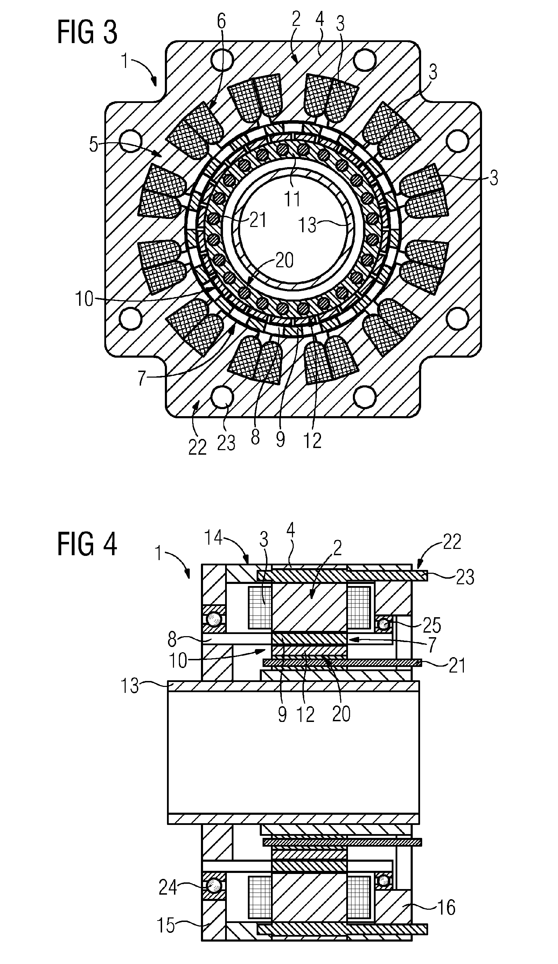

FIG 3 zeigt eine weitere Ausführungsform einer elektrischen Maschine 1 in einem Querschnitt. Die in FIG 3 dargestellte elektrische Maschine 1 unterscheidet sich von der gemäß FIG 1 dadurch, dass die elektrische Maschine 1 eine erste Kühleinrichtung 20 zum Kühlen des Innenstators 10 aufweist. Die erste Kühleinrichtung 20 umfasst eine Mehrzahl von Kühlrohren 21, die innerhalb des Eisenpakets 11 des Innenstators 12 angeordnet sind. Die Kühlrohre 21 sind in Umfangsrichtung des Innenstators 12 gleichmäßig verteilt angeordnet. Die Kühlrohre 21 erstrecken sich entlang der axialen Richtung der elektrischen Maschine 1. Mit der ersten Kühleinrichtung 20 können die Permanentmagnete 12 gekühlt werden. Bei der elektrischen Maschine 1 gemäß FIG 3 können die Permanentmagneten 12 beispielsweise aus einem Ferrit gefertigt sein.

Des Weiteren umfasst die elektrische Maschine 1 eine zweite Kühleinrichtung 22. Auch die zweite Kühleinrichtung 22 umfasst eine Mehrzahl von Kühlrohren 23, die sich entlang der axialen Richtung der elektrischen Maschine erstrecken. Auch die Kühlrohre 23 der zweiten Kühleinrichtung 22 entlang der Umfangsrichtung des Außenstators 2 sind gleichmäßig verteilt angeordnet. Die Kühlrohre 21, 23 können mit einem Kühlmedium, insbesondere einer Kühlflüssigkeit durchströmt sein. Mit der zweiten Kühleinrichtung können die Wicklungen 3 des Außenstators 2 gekühlt werden. Durch die erste Kühleinrichtung 20 kann die Wärme, die im Betrieb der elektrischen Maschine 1 entsteht, von dem Innenstator 10 abgeführt werden. Auf diese Weise kann verhindert werden, dass die Permanentmagneten 9 überhitzen und somit entmagnetisiert werden.

Bei dem Ausführungsbeispiel von FIG 3 weist das Wicklungssystem im Außenstator 2 die Polpaarzahl $p_w = 5$ auf. Aus der Anzahl der Permanentmagnete 12 im Innenstator 10 ergibt sich die Polpaarzahl $p_m = 12$ für den Innenstator 10. Unter Berücksichtigung der oben genannten Formel ist nach außen hin die Polpaarzahl $p_r = 17$ des Rotors 7 wirksam.

FIG 4 zeigt die elektrische Maschine 1 gemäß FIG 3 im Querschnitt. Hierbei ist zu erkennen, dass die Welle 13 der elektrischen Maschine 1 in dem vorliegenden Ausführungsbeispiel als Hohlwelle ausgebildet ist. Darüber hinaus weist die elektrische Maschine 1 hierbei ein erstes Lagerelement 24 und ein zweites Lagerelement 25 auf. Das erste Lagerelement 24 ist zwischen dem ersten Flansch 15 und dem Rotor 7 angeordnet. Das zweite Lagerelement 25 ist zwischen dem zweiten Flansch 16 und dem Rotor 7 angeordnet. Die Lagerelemente 24, 25 können insbesondere als Kugellager ausgebildet sein.

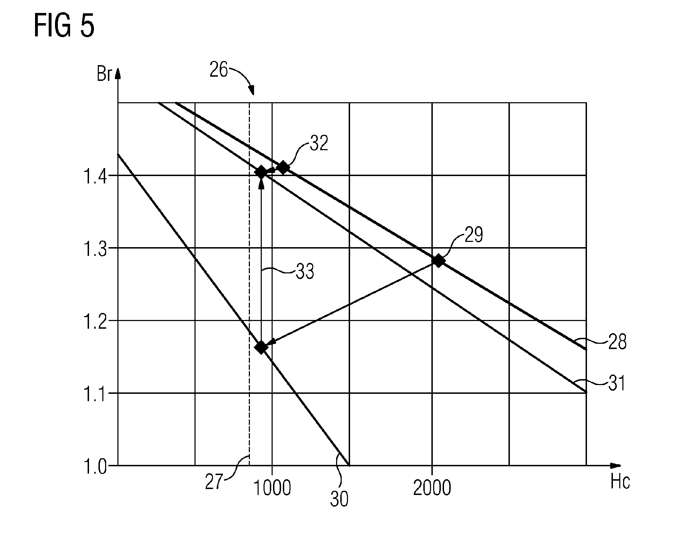

FIG 5 zeigt einen Graphen 26, bei dem auf der Abszisse die Koerzitivfeldstärke Hc und auf der Ordinate die Remanenz Br dargestellt sind. Auf der Abszisse sind vorliegend beispielhaft Werte für die Koerzitivfeldstärke Hc in kA/m dargestellt. Des Weiteren sind auf der Ordinate beispielhafte für die Remanenz Br dargestellt. Des Weiteren kennzeichnet die gestrichelte Linie 27 den Minimalwert für die Koerzitivfeldstärke Hc. Durch den Graph 26 soll der Zusammenhang aus Remanenz Br, Koerzitivfeldstärke Hc und Temperatur dargestellt werden. Vorliegend stellt die Gerade 28 den Zusammenhang zwischen Koerzitivfeldstärke Hc und Remanenz Br für einen Permanentmagneten 12 dar, der aus Eisen-Neodym-Bor gebildet ist.

Derartige Magnetqualitäten mit hoher Remanenz haben einen höheren Anteil an schweren Seltenen Erden. Dabei stellt der Punkt 29 ein erstes Material mit einer hohen Koerzitivfeldstärke Hc und einer geringen Remanenz Br dar. Wenn die Temperatur innerhalb der elektrischen Maschine 1 beispielsweise auf einen Wert von 130° C erhöht wird, verändert sich die Koerzitivfeldstärke Hc und die Remanenz Br des ersten Materials in Folge der Temperaturkoeffizienten des ersten Materials. Für den Zusammenhang zwischen Koerzitivfeldstärke Hc und Remanenz Br gilt der Zusammenhang, der durch die Gerade 30 beschrieben ist.

Wenn nun die Permanentmagnete 12 mittels der ersten Kühleinrichtung 20 mit einer Kühlflüssigkeit, insbesondere Wasser, gekühlt werden und daher beispielsweise nur auf eine Temperatur von maximal 40° C erwärmt werden, können Materialien mit einer geringeren Koerzitivfeldstärke Hc eingesetzt werden. Dies ist vorliegend durch die Gerade 31 verdeutlicht. Wenn in diesem Fall ein zweites Material, welches vorliegend durch den Punkt 32 verdeutlicht ist, verwendet wird, das eine hohe Remanenz Br und eine geringe Koerzitivfeldstärke Hc aufweist, hat dies einerseits den Vorteil, dass die Remanenz Br deutlich, beispielsweise um einen Wert von 20 %, erhöht wird. Dies ist vorliegend durch den Pfeil 33 verdeutlicht. Ein weiterer Vorteil ergibt sich dadurch, dass weniger teure Seltene Erden für die Permanentmagneten 12 verwendet werden müssen. Die Auswahl des ersten und des zweiten Materials ergibt sich aus der Forderung, dass der Mindestwert für die Koerzitivfeldstärke Hc, der durch die Linie 27 gekennzeichnet ist, nicht unterschritten werden darf, weil es sonst im Betrieb der elektrischen Maschine 1 zur Abmagnetisierung kommen würde.

**Patentansprüche**

1. Elektrische Maschine (1) mit

   - einem Außenstator (2),
   - einem Innenstator (10), der konzentrisch zu dem Außenstator (2) innerhalb des Außenstators (2) angeordnet ist, und
   - einem Rotor (7), der konzentrisch zu dem Außenstator (2) und dem Innenstator (10) zwischen dem Außenstator (2) und dem Innenstator (10) angeordnet ist und der relativ zum Außenstator (2) und zum Innenstator (10) bewegbar ist,
   **dadurch gekennzeichnet, dass**
   - der Außenstator (2) eine Mehrzahl von Wicklungen (3) aufweist,
   - der Innenstator (10) eine Mehrzahl von Permanentmagneten (12) aufweist, und
   - der Rotor (7) ein Trägerelement (8) umfasst, das aus einem amagnetischen Material gebildet ist und das eine Mehrzahl von Aussparungen aufweist, in denen jeweils ein weichmagnetisches Segment (9) angeordnet ist.

2. Elektrische Maschine (1) nach Anspruch 1, **dadurch gekennzeichnet , dass** die elektrische Maschine

(1) eine erste Kühleinrichtung (20) zum Kühlen des Innenstators (10) aufweist.

**3.** Elektrische Maschine (1) nach Anspruch 1 oder 2, **dadurch gekennzeichnet , dass** die elektrische Maschine (1) eine zweite Kühleinrichtung (22) zum Kühlen des Außenstators (2) aufweist.

**4.** Elektrische Maschine (1) nach einem der vorhergehenden Ansprüche, **dadurch gekennzeichnet , dass** die erste Kühleinrichtung (20) und/oder die zweite Kühleinrichtung (22) eine Mehrzahl von Kühlrohren (21, 23) aufweist, die von einer Kühlflüssigkeit durchströmt sind.

**5.** Elektrische Maschine (1) nach Anspruch 4, **dadurch gekennzeichnet, dass** die die Kühlrohre (21, 23) in einem Eisenpaket (4, 11) des Innenstators (10) und/oder des Außenstators (2) angeordnet sind.

**6.** Elektrische Maschine (1) nach Anspruch 4 oder 5, **dadurch gekennzeichnet , dass** die Kühlrohre (21, 23) entlang der axialen Richtung der elektrischen Maschine (1) in Umfangsrichtung gleichmäßig verteilt angeordnet sind.

**7.** Elektrische Maschine (1) nach einem der vorhergehenden Ansprüche, **dadurch gekennzeichnet , dass** die Permanentmagnete (12) des Innenstators (10) aus einem Ferrit gebildet sind.

**8.** Elektrische Maschine (1) nach einem der Ansprüche 1 bis 6, **dadurch gekennzeichnet , dass** die Permanentmagnete (12) des Innenstators (10) Eisen-Neodym-Bor enthalten.

**9.** Elektrische Maschine (1) nach einem der vorhergehenden Ansprüche, **dadurch gekennzeichnet, dass** der Rotor (7) topfförmig ausgebildet ist.

**10.** Elektrische Maschine (1) nach einem der vorhergehenden Ansprüche, **dadurch gekennzeichnet , dass** der Rotor (7) mit einer Welle (13) verbunden ist, die als Hohlwelle ausgebildet ist.

**Geänderte Patentansprüche gemäss Regel 137(2) EPÜ.**

**1.** Elektrische Maschine (1) mit

- einem Außenstator (2),
- einem Innenstator (10), der konzentrisch zu dem Außenstator (2) innerhalb des Außenstators (2) angeordnet ist, und
- einem Rotor (7), der konzentrisch zu dem Außenstator (2) und dem Innenstator (10) zwischen dem Außenstator (2) und dem Innenstator (10) angeordnet ist und der relativ zum Außenstator (2) und zum Innenstator (10) bewegbar ist, wobei
- der Außenstator (2) eine Mehrzahl von Wicklungen (3) aufweist,
- der Innenstator (10) eine Mehrzahl von Permanentmagneten (12) aufweist, und
- der Rotor (7) ein Trägerelement (8) umfasst, das aus einem amagnetischen Material gebildet ist und das eine Mehrzahl von Aussparungen aufweist, in denen jeweils ein weichmagnetisches Segment (9) angeordnet ist, **dadurch gekennzeichnet, dass**
- die elektrische Maschine (1) eine erste Kühleinrichtung (20) zum Kühlen der Permanentmagnete (12) des Innenstators (10) aufweist.

**2.** Elektrische Maschine (1) nach Anspruch 1, **dadurch gekennzeichnet, dass** die elektrische Maschine (1) eine zweite Kühleinrichtung (22) zum Kühlen des Außenstators (2) aufweist.

**3.** Elektrische Maschine (1) nach einem der vorhergehenden Ansprüche, **dadurch gekennzeichnet, dass** die erste Kühleinrichtung (20) und/oder die zweite Kühleinrichtung (22) eine Mehrzahl von Kühlrohren (21, 23) aufweist, die von einer Kühlflüssigkeit durchströmt sind.

**4.** Elektrische Maschine (1) nach Anspruch 3, **dadurch gekennzeichnet, dass** die Kühlrohre (21, 23) in einem Eisenpaket (4, 11) des Innenstators (10) und/oder des Außenstators (2) angeordnet sind.

**5.** Elektrische Maschine (1) nach Anspruch 3 oder 4, **dadurch gekennzeichnet, dass** die Kühlrohre (21, 23) entlang der axialen Richtung der elektrischen Maschine (1) in Umfangsrichtung gleichmäßig verteilt angeordnet sind.

**6.** Elektrische Maschine (1) nach einem der vorhergehenden Ansprüche, **dadurch gekennzeichnet, dass** die Permanentmagnete (12) des Innenstators (10) aus einem Ferrit gebildet sind.

**7.** Elektrische Maschine (1) nach einem der Ansprüche 1 bis 5, **dadurch gekennzeichnet, dass** die Permanentmagnete (12) des Innenstators (10) Eisen-Neodym-Bor enthalten.

**8.** Elektrische Maschine (1) nach einem der vorhergehenden Ansprüche, **dadurch gekennzeichnet, dass** der Rotor (7) topfförmig ausgebildet ist.

**9.** Elektrische Maschine (1) nach einem der vorhergehenden Ansprüche, **dadurch gekennzeichnet, dass** der Rotor (7) mit einer Welle (13) verbunden ist, die als Hohlwelle ausgebildet ist.

FIG 1

FIG 2

FIG 3

FIG 4

FIG 5

Europäisches
Patentamt

European
Patent Office

Office européen
des brevets

**EUROPÄISCHER RECHERCHENBERICHT**

Nummer der Anmeldung

EP 14 16 3031

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 528 207 A1 (DELPHI AUTOMOTIVE SYSTEMS LUX [LU]) 28. November 2012 (2012-11-28) | 1,7-9 | INV.<br>H02K21/40<br>H02K1/20 |
| Y | * Absatz [0028] - Absatz [0042] *<br>----- | 2-6,10 | |
| Y | DE 10 2011 012454 A1 (NORDEX ENERGY GMBH [DE]) 30. August 2012 (2012-08-30)<br>* Absatz [0022] - Absatz [0032] *<br>----- | 2-6,10 | |
| A | EP 2 503 671 A1 (SIEMENS AG [DE]) 26. September 2012 (2012-09-26)<br>* Zusammenfassung *<br>----- | 1-10 | |
| A | DE 198 38 378 A1 (MAGNET MOTOR GMBH [DE]) 2. März 2000 (2000-03-02)<br>* Zusammenfassung *<br>----- | 1-10 | |
| A | DE 17 63 298 A1 (KURAKIN ALEXANDR SERGEJEWITSCH; JUFEROW FEDOR MICHAJLOWITSCH) 28. Oktober 1971 (1971-10-28)<br>* Seite 6, Zeile 15 - Seite 7, Zeile 2 *<br>----- | 1-10 | |

RECHERCHIERTE
SACHGEBIETE (IPC)

H02K

Der vorliegende Recherchenbericht wurde für alle Patentansprüche erstellt

| Recherchenort | Abschlußdatum der Recherche | Prüfer |
|---|---|---|
| München | 18. September 2014 | Frapporti, Marc |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 16 3031

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-09-2014

| Im Recherchenbericht angeführtes Patentdokument | | Datum der Veröffentlichung | Mitglied(er) der Patentfamilie | | Datum der Veröffentlichung |
|---|---|---|---|---|---|
| EP 2528207 | A1 | 28-11-2012 | KEINE | | |
| DE 102011012454 | A1 | 30-08-2012 | KEINE | | |
| EP 2503671 | A1 | 26-09-2012 | CN | 103444052 A | 11-12-2013 |
| | | | EP | 2503671 A1 | 26-09-2012 |
| | | | US | 2014009026 A1 | 09-01-2014 |
| | | | WO | 2012126712 A1 | 27-09-2012 |
| DE 19838378 | A1 | 02-03-2000 | CA | 2341272 A1 | 02-03-2000 |
| | | | DE | 19838378 A1 | 02-03-2000 |
| | | | DE | 59912744 D1 | 08-12-2005 |
| | | | EP | 1110298 A1 | 27-06-2001 |
| | | | MX | PA01002009 A | 24-04-2002 |
| | | | US | 6459185 B1 | 01-10-2002 |
| | | | WO | 0011777 A1 | 02-03-2000 |
| DE 1763298 | A1 | 28-10-1971 | DE | 1763298 A1 | 28-10-1971 |
| | | | NL | 6805113 A | 14-10-1969 |

EPO FORM P0461

Für nähere Einzelheiten zu diesem Anhang : siehe Amtsblatt des Europäischen Patentamts, Nr.12/82